# EUROPEAN PATENT APPLICATION

(11) **EP 3 663 810 A1**
(43) Date of publication of application: **10.06.2020**
(21) Application number: 18840492.5
(22) Date of filing: 23.05.2018
(51) Int. Cl.: G02B 1/11

(54) **ANTI-REFLECTION STRUCTURE, DISPLAY DEVICE AND FABRICATION METHOD FOR ANTI-REFLECTION STRUCTURE**

(30) Priority: 03.08.2017 CN 201710657046
(71) Applicant: BOE Technology Group Co., Ltd., Beijing 100015 (CN); Beijing BOE Display Technology Co., Ltd., Beijing 100176 (CN)
(72) Inventor: GUI, Bingqiang, Beijing 100176 (CN); QU, Lianjie, Beijing 100176 (CN); QI, Yonglian, Beijing 100176 (CN); WANG, Meili, Beijing 100176 (CN); ZHAO, Hebin, Beijing 100176 (CN); QIU, Yun, Beijing 100176 (CN)
(74) Representative: Klunker IP Patentanwälte PartG mbB
(86) International application number: PCT/CN2018/088030
(87) International publication number: WO 2019/024572

(57) **Abstract**

An anti-reflection structure, a display device and a fabrication method for the anti-reflection structure. The anti-reflection structure (100) comprises a substrate (1), a first microstructure and a second microstructure (3). The first microstructure comprises a plurality of first microstructure units (2) periodically arranged on the substrate (1), a second microstructure (3) is filled between the first microstructures so as to cover the substrate (1), and the anti-reflection structure (100) has a flat surface. The refractive indices of the first microstructure and the second microstructure (3) are different and are configured such that overall, the reflectivity of the anti-reflection structure (100) to light of a predetermined wavelength is lower than the reflectivity of the substrate (1) to light of the predetermined wavelength. The anti-reflection structure has strong anti-scratch capability while achieving an anti-reflection effect.

## Description

The application claims priority to the Chinese patent application No. 201710657046.4, filed on August 03, 2017, the entire disclosure of which is incorporated herein by reference as part of the present application.

### TECHNICAL FIELD

At least one embodiment of the present disclosure relates to an anti-reflection structure, a display device and a fabrication method for an anti-reflection structure.

### BACKGROUND

Human eyes often feel uncomfortable when watching a display because of a reflection of environmental light from the display. Applying an anti-reflection structure in improving the uncomfortable reflection phenomenon can make people get a more comfortable experience when they watch the display. In a case where the anti-reflection structure is applied to a surface of the display, it is very important to improve an ability of anti-scratch of the anti-reflection structure for improving a working life of the anti-reflection. If the anti-reflection structure is arranged under a glass cover of a display panel in order to prevent scratches, a reflection at an interface of the glass cover and an air medium cannot be eliminated. It is needed to find a way to enhance the ability of anti-scratch of the anti-reflection structure.

### SUMMARY

At least one embodiment of the present disclosure provides an anti-reflection structure, comprising: a substrate; a first microstructure comprising a plurality of first microstructure units periodically arranged on the substrate; and a second microstructure filled among the first microstructure to cover the substrate, to allow the anti-reflection structure to include a flat surface. The first microstructure and the second microstructure have different refractive indexes from each other, and are configured to allow a reflective index of the whole anti-reflection structure to light of a predetermined wavelength to be less than a reflective index of the substrate to the light of the predetermined wavelength.

For example, in an anti-reflection structure provided by an embodiment of the present disclosure, along a direction from a position away from the substrate to the substrate, an equivalent refractive index of the anti-reflection structure to the light of the predetermined wavelength varies in gradient from small to large.

For example, in an anti-reflection structure provided by an embodiment of the present disclosure, material of the second microstructure has a refractive index less than that of the first microstructure.

For example, in an anti-reflection structure provided by an embodiment of the present disclosure, the first microstructure and the substrate are a one-piece structure.

For example, in an anti-reflection structure provided by an embodiment of the present disclosure, the first microstructure forms a one-dimensional grating or a two-dimensional grating.

For example, in an anti-reflection structure provided by an embodiment of the present disclosure, the second microstructure has a thickness equal to or less than that of the first microstructure.

For example, in an anti-reflection structure provided by an embodiment of the present disclosure, the second microstructure has a thickness greater than that of the first microstructure, and the second microstructure covers the first microstructure.

For example, in an anti-reflection structure provided by an embodiment of the present disclosure, a space exposing the substrate is provided between adjacent ones of the plurality of first microstructure units.

For example, in an anti-reflection structure provided by an embodiment of the present disclosure, no space exposing the substrate is provided between adjacent ones of the plurality of first microstructure units.

For example, in an anti-reflection structure provided by an embodiment of the present disclosure, along a direction from the substrate to a position away from the substrate, a size, which is in a direction parallel to the substrate, of a cross-sectional surface, which is perpendicular to the substrate, of the first microstructure, decreases gradually.

For example, in an anti-reflection structure provided by an embodiment of the present disclosure, the substrate, the first microstructure and the second microstructure are made of transparent materials.

At least one embodiment of the present disclosure provides a display device, comprising the anti-reflection structure. The anti-reflection structure is at a display side of the display device.

At least one embodiment of the present disclosure provides a manufacturing method of an anti-reflection structure, comprising: providing a substrate; forming a first microstructure on the substrate; and forming a second microstructure on the substrate. The first microstructure is periodically arranged on the substrate, and the second microstructure is filled in the first microstructure to cover the substrate, to allow the anti-reflection structure to include a flat surface; and the first microstructure and the second microstructure have different refractive indexes, and configured to allow a reflective index of the whole anti-reflection structure to light of a predetermined wavelength to be less than a reflective index of the substrate to the light of the predetermined wavelength.

For example, in a manufacturing method of an anti-reflection structure provided by an embodiment of the present disclosure, forming of the first microstructure on the substrate and forming of the second microstructure on the substrate comprise: forming a first film layer on the substrate; forming the first microstructure using the first film layer; and forming a second film layer on the first microstructure to form the second microstructure.

For example, in a manufacturing method of an anti-reflection structure provided by an embodiment of the present disclosure, forming of the first microstructure on the substrate and forming of the second microstructure on the substrate comprise: forming the first microstructure to be integrally with the substrate by using the substrate; and forming a second film layer on the first microstructure to form the second microstructure.

For example, in a manufacturing method of an anti-reflection structure provided by an embodiment of the present disclosure, forming of the first microstructure on the substrate and forming of the second microstructure on the substrate comprise: forming a photorefractive index change film layer on the substrate; and illuminating the photorefractive index change film layer by light under a preset condition, so that a refractive index of a portion, which is used to form the first microstructure, of the photo refractive index change layer becomes larger, or a refractive index of a portion, which is used to form the second microstructure, of the photorefractive index change film layer becomes smaller.

### BRIEF DESCRIPTION OF THE DRAWINGS

In order to clearly illustrate the technical solution of the embodiments of the disclosure, the drawings of the embodiments will be briefly described in the following. It is apparent that the described drawings are only related to some embodiments of the disclosure and are not limits to the disclosure.
Fig. 1 is a schematic plan view of an anti-reflection;
Fig. 2 is a cross-sectional schematic view along a line I-I' shown in Fig. 1;
Fig. 3 is a schematic plan view of an anti-reflection provided by an embodiment of the present disclosure;
Fig. 4 is a cross-sectional schematic view along a line A-A' shown in Fig. 3;
Fig. 5 is a schematic plan view of another anti-reflection provided by the embodiment of the present disclosure;
Fig. 6 is a cross-sectional schematic view along a line E-E' shown in Fig. 5;
Fig. 7 is a schematic plan view of yet another anti-reflection provided by the embodiment of the present disclosure;
Fig. 8 is a cross-sectional schematic view along a line G-G' shown in Fig. 7;
Fig. 9 is a schematic plan view of yet another anti-reflection provided by the embodiment of the present disclosure;
Fig. 10 is a cross-sectional schematic view along a line H-H' shown in Fig. 9;
Fig. 11 is a cross-sectional schematic view of a display device provided by an embodiment of the present disclosure;
Fig. 12A- Fig.12F are schematic views of a manufacturing method of an anti-reflection provided by an embodiment of the present disclosure;
Fig. 13A- Fig.13F are schematic views of another manufacturing method of an anti-reflection provided by the embodiment of the present disclosure;
Fig. 14A- Fig.14C are schematic views of yet another manufacturing method of an anti-reflection provided by the embodiment of the present disclosure.

### DETAILED DESCRIPTION

In order to make objects, technical solutions and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, one of ordinary skill in the art can obtain other embodiment(s) without any creative work, which shall be within the scope of the disclosure.

Unless otherwise defined, all the technical and scientific terms used herein have the same meanings as commonly understood by one of ordinary skill in the art to which the present disclosure belongs. The terms "first," "second," or the like, which are used in the present application for disclosure, are not intended to indicate any sequence, amount or importance, but to distinguish various components. The terms "comprise," "comprising," "include," "including," or the like, are intended to specify that the elements or the objects stated before these terms encompass the elements or the objects and equivalents thereof listed after these terms, but do not preclude other elements or objects. The terms "connect", "connected", or the like, are not limited to a physical connection or mechanical connection, but may also include an electrical connection, directly or indirectly. "On," "under," "right," "left" or the like are only used to indicate relative position relationship, and when the position of the object which is described is changed, the relative position relationship may be changed accordingly.

The figures in embodiments of the present disclosure are not drawn according to actual proportions or scales. A number of first microstructure units is not limited to the number shown in the figures, a specific size and a number of the first microstructure units may be determined according to actual acquirements, and the figures of the embodiments of the present disclosure are only schematic views.

When light is incident from one medium to another medium, a reflection is generated at an interface of the two mediums. A magnitude of a reflective index is related to a magnitude of refractive indexes of the two mediums respectively at two sides of the interface. The greater the difference between the two refractive indexes of the two mediums, the greater the reflection loss of a surface light energy. An anti-reflection structure can reduce reflection light at the interface of the mediums. Current anti-reflection structures include types, such as single-layer anti-reflection film, multi-layer anti-reflection film or sub-wavelength anti-reflection structure, etc.

In a case where reflection is reduced by using a single-layer anti-reflection film, choosing an appropriate optical thickness of the single-layer anti-reflection film can achieve a zero reflection of light of a target wavelength on a surface of the single-layer anti-reflection film, but the single-layer anti-reflection film can only aim at light of a certain wavelength, and sometimes a coating material with a required refractive index does not exist in nature, and the above effect cannot be achieved.

A method of achieving a reflection reduction by using a multi-layer anti-reflection film refers to that forming films on a surface of an optical element, in which refractive indexes of the layers change continuously, that is, the refractive indexes of the layers gradually changes along a direction from one medium to another medium, light waves reflected by interfaces of the layers interference with each other, and eventually reflection light decreases or disappears. This method can achieve a high transmission in a large field of view and a large spectral range. However, due to the gradual change of the refractive indexes of the layers of the multi-layer anti-reflection film, a preparation process of the multi-layer anti-reflection film is complex, and sometimes a coating material with a required refractive index does not exist in nature, and the above effect cannot be achieved.

A sub-wavelength anti-reflection structure has fewer limitations on materials required, and an effect of anti-reflection of the sub-wavelength anti-reflection structure can be better than that of the above-mentioned anti-reflection films and the sub-wavelength anti-reflection structure is easily integrated. Thus, wavelength anti-reflection structures become a research hotspot in a field of anti-reflection and have a great application space in the field of anti-reflection. A principle of a sub-wavelength anti-reflection structure is briefly introduced below.

A sub-wavelength microstructure refers to a periodic structure whose size is less than a wavelength of light acted thereon. A subwavelength grating refers to a grating structure whose period is less than a wavelength of light acted thereon. It is manufactured based on the theory of subwavelength microstructures and can be used as an anti-reflection structure. When the period of the sub-wavelength grating is less than a wavelength of light incident to the sub-wavelength grating, a traditional diffraction phenomenon disappears, and only zero-order reflection and transmission diffraction exist. The equivalent medium theory can also be used to explain the principle of the sub-wavelength anti-reflection structure. In a case where a period of the sub-wavelength anti-reflection structure is smaller enough compared with a wavelength of light acted thereon, the sub-wavelength structure possesses the characteristics of a homogeneous medium. The equivalent medium theory refers to that replacing a periodic structure with a homogeneous medium. A sub-wavelength microstructure grating can be considered as a homogeneous medium, and a refractive index of the sub-wavelength microstructure grating is an equivalent refractive index. When light is incident to a sub-wavelength grating whose duty ratio varies with a depth thereof, light waves cannot distinguish profiles of the sub-wavelength grating. That is, for the light, the surface profile is uniform, as the light travels in a film with a refractive index changing gradually. A reflective index and a transmissivity of the sub-wavelength anti-reflection structure can be changed by adjusting parameters of the sub-wavelength grating, such as period, shape, duty ratio and depth. In this way, a material with the refractive index of the sub-wavelength anti-reflection structure does not exist in nature, and for example, a reflective index of the sub-wavelength microstructure grating to the light of a predetermined wavelength can be almost zero, thus the sub-wavelength micro-structure grating can be made into an anti-reflection structure. If the duty ratio of the sub-wavelength grating increases in a depth direction thereof, it is equivalent to that the equivalent refractive index also increases in the depth direction. In this way, a refractive index of each thin film is less than a refractive index of a underlying film, so that a structure with a graded refractive index is formed, which is equivalent to that the sub-wavelength grating whose duty ratio varies with the depth thereof forms an anti-reflection film structure with the refractive index changes in gradient, so that an effect of anti-reflection in the large field of view and the large spectral range can be achieved.

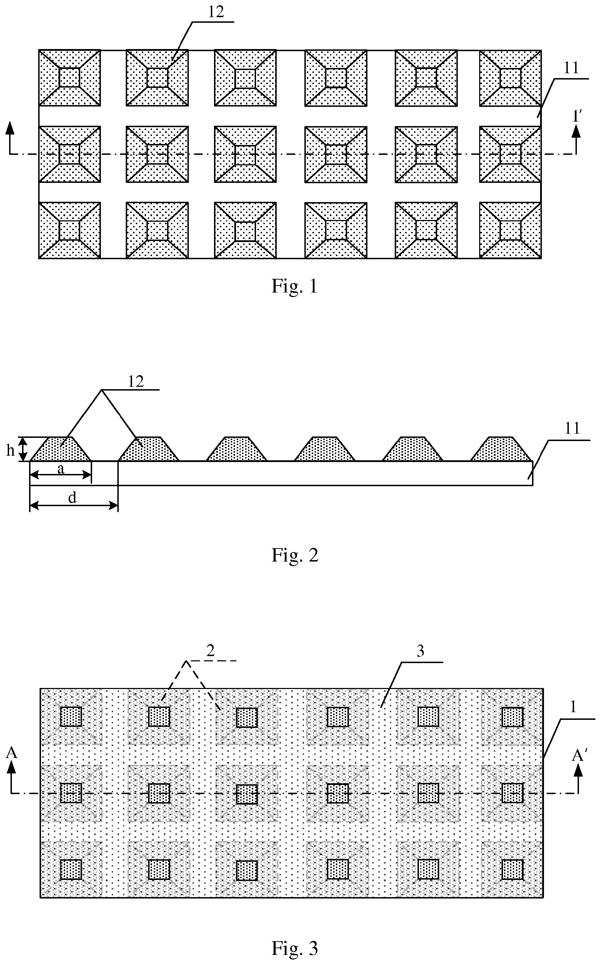

Fig. 1 is a schematic plan view of an anti-reflection structure, Fig. 2 is a cross-sectional view along a line I-I' shown in Fig. 1, and the anti-reflection structure is a sub-wavelength anti-reflection structure. As shown in Fig. 1 and Fig. 2, a microstructure 12 periodically distributed are arranged on a substrate 11 to form a sub-wavelength two-dimensional grating. In Fig. 2, *d* represents a period of the grating, *a* represents a linewidth, *h* represents a depth of the grating, *a* varies along the depth direction of the grating, and *a* gradually increases from a position far away from the substrate to a surface of the substrate. *f* represents a duty ratio of the sub-wavelength anti-reflection structure, thus *f* = *a*/*d.* As the principle above, the reflective index of the sub-wavelength anti-reflection structure to natural light or light of other wavelengths can be less than that of the substrate by designing appropriate period *d,* depth *h* of the grating and duty ratio *f* to reach an effect of anti-reflection. And the sub-wavelength anti-reflection structure can be applied to a surface of a display, a lens, a solar cell, etc. as an anti-reflection structure, to improve the reflection phenomenon affecting human eyes caused by the reflection of light from the surface of the display, etc. and enhance a light collection efficiency of the lens, the solar cell, etc. However, when it is required to apply the sub-wavelength anti-reflection structure to an outer surface of a display panel for touch operations, such as a display panel of a touch mobile phone or a tablet computer, etc., the ability of scratch resistance of the anti-reflection structure is weak due to lack of protection structures above the substrate 1 and the microstructure 12, which affects a working life of the anti-reflection structure and thus affects a working life of a display device adopting the anti-reflection structure.

At least one embodiment of the present disclosure provides an anti-reflection structure, and the anti-reflection structure comprises: a substrate, a first microstructure and a second microstructure. The first microstructure is periodically arranged on the substrate; the second microstructure is filled among the first microstructure to cover the substrate, to allow the anti-reflection structure to include a flat surface. The first microstructure and the second microstructure have different refractive indexes, and are configured to allow a reflective index of the whole anti-reflection structure to light of a predetermined wavelength to be lower than a reflective index of the substrate to the light of the predetermined wavelength.

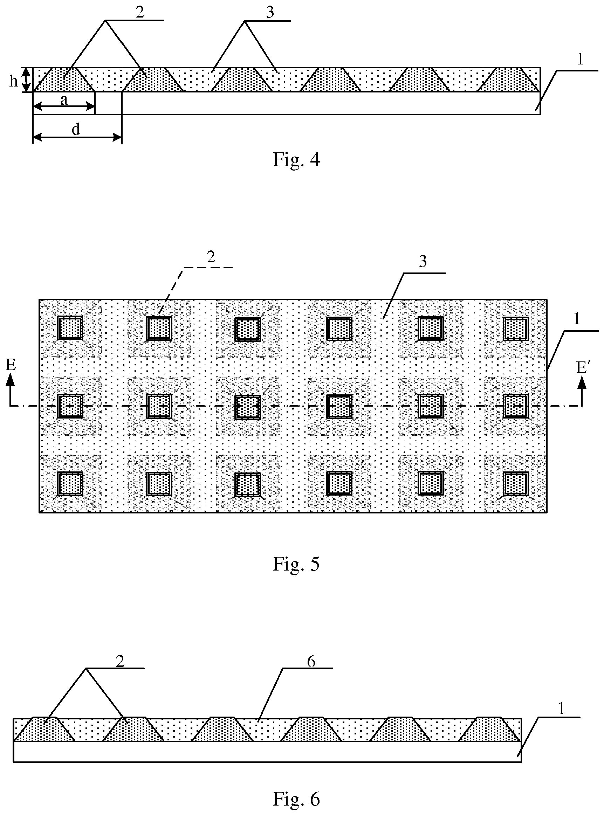

Exemplary, Fig. 3 is a schematic plan view of an anti-reflection provided by an embodiment of the present disclosure, and Fig. 4 is a schematic cross-sectional view along a line A-A' shown in Fig. 3. As shown in Fig. 3 and Fig. 4, the anti-reflection structure comprises: a substrate 1, a first microstructure and a second microstructure 3. The first microstructure comprises a plurality of first microstructure units 2, the plurality of first microstructure units 2 are arranged on the substrate 1, and the plurality of first microstructure units 2 are periodically distributed and are separated from each other. Both a period *d* and a thickness *h* of the plurality of first microstructure units 2 are less than or substantially equal to a wavelength of light requiring anti-reflection, so that the plurality of first microstructure units 2 and the substrate 1 form a sub-wavelength grating. In the embodiment shown in Fig. 3 and Fig. 4, the first microstructure forms a two-dimensional grating. According to the principle of anti-reflection of the sub-wavelength grating, the period *d,* the thickness *h* (that is the depth of the grating above) and the duty ratio *f* along a direction of the thickness *h* of each of the first microstructure units can be adjusted according to the wavelength of the light requiring anti-reflection, so as to obtain an equivalent reflective index of the whole sub-wavelength grating to the target wavelength. The equivalent reflective index is less than a reflective index of a surface of the substrate 1, so that a reduction of the reflective index of the light of the predetermined wavelength is achieved. For example, the reflective index of the anti-reflection structure to the light of the predetermined wavelength is nearly zero, and the effect of anti-reflection is achieved. The second microstructure 3 is filled among the plurality of first microstructure units 2 to cover the substrate 1, so that the first microstructure units 2 on the substrate 1 get a protection and the anti-reflection structure possesses a flat surface (comprising a case where the surface is basically flat). In this way, the anti-reflection structure possesses a better ability of anti-scratch.

A refractive index of a material of the first microstructure is different from a refractive index of a material of the second microstructure 3. For example, in the embodiment shown in Fig. 3 and Fig. 4, the refractive index of a material of the second microstructure 3 is less than the refractive index of a material of the first microstructure. This is equivalent to that replacing an air medium among the first microstructure units 2 by a medium whose refractive index is less than that of each of the first microstructure units 2, thus the first microstructure units 2 and the second microstructure still form a sub-wavelength grating which can achieve an anti-reflection function.

For example, in the embodiment shown in Fig. 3 and Fig. 4, along a direction from the substrate 1 to a position away from the substrate 1, a lateral size, which is in a direction parallel to the substrate 1, of a cross-sectional surface, which is perpendicular to the substrate 1, of each of the plurality of first microstructure units 2, decreases gradually. That is, in the embodiment of the present disclosure, the lateral size of each of the plurality of first microstructure units refers to a size, which is in a direction parallel to the substrate 1, of a cross-sectional surface, which is perpendicular to the substrate 1, of each of the plurality of first microstructure units 2. For example, the cross-sectional surface of each of the plurality of first microstructure units 2 perpendicular to the substrate is a trapezoid. An edge, which is near the substrate, of the trapezoid is a lower edge, and an edge, which is far away from the substrate, of the trapezoid, is an upper edge. A length of the upper edge is less than a length of the lower edge. In this case, the lateral size of each of the plurality of first microstructure units refers to a size of the lower edge of the trapezoid, which is parallel to the substrate, of each of the plurality of first microstructure units. In this way, along a direction from a position far away from the substrate 1 to the surface of the substrate 1, the duty ratio *f* increases gradually. As the refractive index of the material of the second microstructure 3 is less than the refractive index of the material of the first microstructure, a proportion of the material of the first microstructure increases gradually. According to the above-mentioned principle of anti-reflection of the sub-wavelength grating, when light is incident into a sub-wavelength grating whose duty ratio *f* varies with the thickness *h,* light waves cannot distinguish profiles of the sub-wavelength grating. That is, for the light, the surface profile is uniform, as the light travels in a film with a refractive index changing gradually. According to the above-mentioned equivalent medium theory, in the anti-reflection structure, the equivalent index increases gradually along the direction of the thickness *h* which is from a position far away from the substrate 1 to the surface of the substrate 1. In this way, a refractive index of each upper thin layer is less than a refractive index of a lower film, and a structure with a refractive index changing gradually is formed, which is equivalent to that the sub-wavelength grating whose duty ratio varies with the thickness *h* forms an anti-reflection film structure with the refractive index changed in gradient, so that an anti-reflection effect can be achieved to light with a target wavelength. That is, in the anti-reflection structure, along the direction away from the substrate to the substrate, an equivalent refractive index of the anti-reflection structure to the light of the predetermined wavelength varies in gradient from small to large.

For example, as shown in Fig. 3 and Fig. 4, a thickness of the second microstructure 3 is equal to a thickness of the first microstructure, so that the second microstructure 3 covers the substrate 1 and covers side surfaces of each first microstructure unit which is in a prismatic shape, so that the anti-reflection structure includes a flat surface, which can achieve a technical effect of a strong ability of anti-scratch.

In an anti-reflection structure provided by another embodiment of the present disclosure, the thickness of the second microstructure is appropriately less than that of the first microstructure. Exemplarily, Fig. 5 is a schematic plan view of yet another anti-reflection provided by the embodiment of the present disclosure, and Fig. 6 is a schematic cross-sectional view along a line E-E' shown in Fig. 5. For example, as shown in Fig. 5 and Fig. 6, the thickness of the second microstructure 3 is appropriately less than that of the first microstructure. For example, a difference between the thickness of the second microstructure 3 and the thickness of the first microstructure is less than 10% relative to the larger thickness, so that the anti-reflection structure possesses a basically flat surface, in this way, technical effects of anti-reflection and anti-scratch are both achieved.

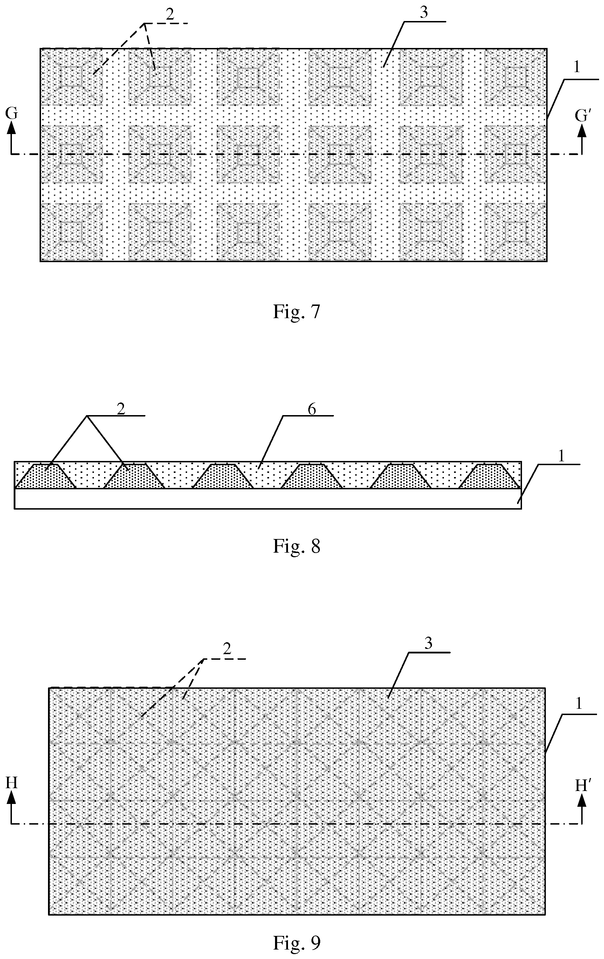

In an anti-reflection structure provided by another embodiment of the present disclosure, the thickness of the second microstructure may be appropriately larger than that of the first microstructure. Fig. 7 is a schematic plan view of yet another anti-reflection provided by the embodiment of the present disclosure, and Fig. 8 is a schematic cross-sectional view along a line G-G' shown in Fig. 7. For example, as shown in Fig. 7 and Fig. 8, the thickness of the second microstructure 3 may be appropriately larger than that of the first microstructure. For example, a difference between the thickness of the second microstructure 3 and the thickness of the first microstructure is less than 10% relative to the larger thickness, and the second microstructure 3 covers the first microstructure and the substrate 1. In this case, the second microstructure 3 is made of a material with a low refractive index, such as magnesium fluoride or other materials with a low refractive index. The lower the refractive index of the second microstructure 3, the better the anti-reflection effect of the anti-reflection structure. Moreover, the anti-reflection structure can achieve the technical effect of the strong ability of anti-scratch.

It should be noted that in the embodiment shown in Fig. 3 and Fig. 4, the term "appropriately less than" and "appropriately larger than" refers to an extent of a range within which the anti-reflection structure can achieve an anti-reflection function. The thickness of the first microstructure may be determined by those skilled in the art according to specific needs of a product, and the thickness of the second microstructure may be determined by those skilled in the art according to the thickness of the first microstructure designed and specific needs. No limitation is imposed to this in the embodiments of the present disclosure.

It should be noted that each of the first microstructure units 2 included in the first microstructure in the above-mentioned embodiment is in the prismatic shape, but each of the first microstructure units 2 in the embodiments of the present disclosure is not limited to be in the prismatic shape, it can also be in other shapes. For example, each of the first microstructure units 2 is in a conical shape, such as a pyramid or a circular cone, or a cross-section perpendicular to the substrate is in a shape of parabola. As shown in Fig. 7 and Fig. 8, each of the first microstructure units of the anti-reflection structure is in a shape of a pyramid, along the direction from a position far away from the substrate 1 to the surface of the substrate 1, the duty ratio *f* of the anti-reflection structure increases gradually. The principle of achieving anti-reflection of the anti-reflection structure is same as that mentioned above, it can be referred to the description above.

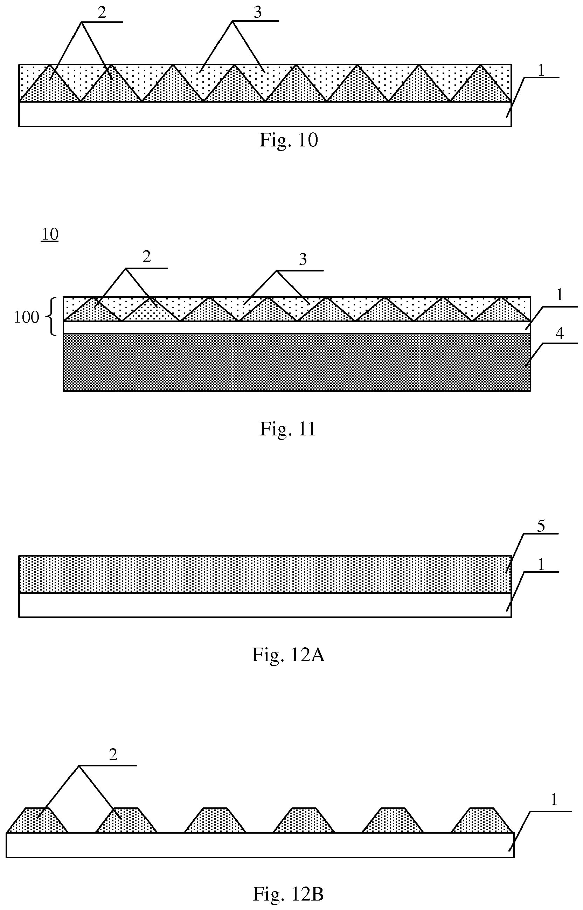

For example, in the anti-reflection structure shown in Fig. 3- Fig. 6, a space exposing the substrate 1 is provided between adjacent ones of the plurality of first microstructure units 2. That is, the plurality of first microstructure units 2 can be arranged periodically and are separated from each other. Fig. 9 is a schematic plan view of yet another anti-reflection provided by the embodiment of the present disclosure, and Fig. 10 is a schematic cross-sectional view along a line H-H' shown in Fig. 9. For example, as shown in Fig. 9 and Fig. 10, no space exposing the substrate 1 is provided between adjacent ones of the plurality of first microstructure units 2. It can also be understood that the plurality of first microstructure units 2 of the first microstructure are arranged periodically and continuously, that is, in this case, the duty ratio *f* is equal to 1 at the interface of the first microstructure and substrate 1.

For example, the first microstructure and the substrate 1 may be formed integrally, that is, the first microstructure and the substrate 1 are made of a same material and no interface exits between the first microstructure and the substrate 1. For example, the first microstructure may be formed using the substrate 1. The anti-reflection structure is designed based on the principle of sub-wavelength grating, which can avoid limitations to the material of the first microstructure, and the first microstructure and the substrate 1 can be made of the same material. The integral formation of the first microstructure and the substrate 1 can reduce types of materials used in the anti-reflection structure and simplifies the manufacturing process of the anti-reflection structure. The first microstructure can also be made of a material different from that of the substrate 1, instead of being an integral structure, the first microstructure can be formed on the substrate 1 separately.

For example, the first microstructure and the second microstructure 3 may be formed integrally to be one piece structure, that is, the first microstructure and the second microstructure 3 are made of a same material and no interface exits between the first microstructure and the second microstructure 3. An advantage of this structure is simplifying the manufacturing process of the anti-reflection structure.

It should be noted that the embodiments above are examples where the first microstructure forms a two-dimensional grating, and in other embodiments of the present disclosure, the first microstructure can also form a one-dimensional grating comprising a plurality of microstructures which are in shapes of strips and parallel to each other and uniformly spaced apart from each other. The principle of achieving anti-reflection is the same as above, no repetition is provided herein.

For example, in the above-mentioned embodiments, the substrate 1, the first microstructure and the second microstructure 3 can be made of transparent materials. In a case where it is necessary to use the anti-reflection structure to achieve both the effect of anti-reflection and an effect of high light transparence, the substrate 1, the first microstructure and the second microstructure 3 are made of transparent materials. For example, in a case where the anti-reflection structure is arranged on a display side of a display device to reduce effect of reflection light on a display effect and meanwhile it is required to achieve light transparence, the anti-reflection structure is required to be transparent. In this case, the substrate 1, the first microstructure and the second microstructure 3 can be made of suitable transparent materials. For example, the substrate 1 can be made of a polymer material, such as polyimide (PI), or polyester, such as polymethyl methacrylate (PMMA), polyethylene terephthalate (PET), polyethylene naphthalate (PEN), cellulose triacetate (TAC), or the like. The first microstructure can be made of silicon dioxide, silicon nitride, or titanium dioxide, or the like. The second microstructure 3 can be made of magnesium fluoride, porous silicon dioxide, or silicon fluoride, or the like.

It should be noted that materials of the substrate, the first microstructure and the second microstructure are not limited to the above-listed types, as long as the refractive index of the material of the first microstructure is larger than that of the material of the second microstructure, and specific types of the materials can be determined according to the specific needs of the product.

The anti-reflection structure provided in the embodiments of the present disclosure can be applied to daily life, industry, astronomy, military science, electronics and other fields, for example, the anti-reflection structure can be applied to a display device, a solar cell and the like, according to light of different predetermined wavelengths, that is, light of different bands whose reflectivity needs to be reduced.

At least one embodiment of the present disclosure also provides a display device comprising any anti-reflection structure provided by at least one embodiment of the present disclosure, and the anti-reflection structure is disposed at a display side of the display device. Exemplarily, Fig. 11 is a schematic cross-sectional view of a display device provided by an embodiment of the present disclosure.

As shown in Fig. 11, an anti-reflection structure 100 is disposed at the display side of a display device 10, and the anti-reflection structure 100 is any one of the above-mentioned anti-reflection structures provided by the embodiments of the present disclosure. The anti-reflection structure 100 is disposed at an outer surface of a display side of a display panel 4. The anti-reflection structure 100 possesses the strong ability of anti-scratch, when human eyes watch a display screen of the display device, the display device 10 can reduce reflection light from the display screen and improve the uncomfortable reflection phenomenon, meanwhile, the surface of the display device 10 possesses a property of anti-scratch and anti-friction, which is beneficial to improving a working life of the display device. The principle of anti-reflection of the display device 10 can be referred to the above description.

For example, the display panel 4 is a display panel with a touch control function. For example, the display panel 4 comprises a touch control structure. In this way, in a case where the display device 100 possesses a touch control function, the anti-reflection structure 100 provided on the display side of the display device can also satisfy the effect of anti-scratch, so that the reflection phenomenon of the touch display device generated during display is reduced, and the surface of the screen of the touch display device possesses the strong anti-scratch ability.

It should be noted that the display panel 4 can be any suitable type of display panel, such as organic light emitting diode display panel, inorganic light emitting diode display panel, liquid crystal display panel, electronic paper display panel, or the like.

An embodiment of the present disclosure only illustrates structures related to the anti-reflection structure of the display device, and other structures of the display device may be referred to common techniques by those skilled in the art.

An embodiment of the present disclosure also provides a manufacturing method of an anti-reflection structure, comprising: providing a substrate; forming a first microstructure on the substrate; and forming a second microstructure on the substrate. The first microstructure is periodically arranged on the substrate, and the second microstructure is filled in the first microstructure to cover the substrate, so that the anti-reflection structure possesses a flat surface; and a refractive index of the first microstructure is different from a refractive index of the second microstructure; the first microstructure and the second microstructure are configured to allow a reflective index of the whole anti-reflection structure to light of a predetermined wavelength to be lower than a reflective index of the substrate to the light of the predetermined wavelength. The anti-reflection structure obtained by the manufacturing method provided by at least one embodiment of the present disclosure can achieve an effect of anti-reflection while possesses a strong ability of anti-scratch.

Exemplarily, Fig. 12A-Fig.12F are schematic views of a manufacturing method of an anti-reflection provided by an embodiment of the present disclosure.

For example, as shown in Fig. 12A, a substrate 1 is provided, and the substrate 1 can be made of a polymer material or a glass material, and for example, the polymer material comprises any of polyimide (PI), or polyester materials, such as polymethyl methacrylate (PMMA), polyethylene terephthalate (PET), polyethylene naphthalate (PEN), cellulose triacetate (TAC), or the like. Then, a first film layer 5 is formed on the substrate 1, and for example, a material of the first film layer 5 comprises any of silicon dioxide, silicon nitride or titanium dioxide, or the like.

As shown in Fig. 12B, the first microstructure can be formed using the first film layer 5. The first microstructure comprises a plurality of first microstructure units 2 periodically arranged on the substrate 1, and the plurality of first microstructure units 2 are separated from each other or continuously distributed. A period *d* and a thickness *h* of the plurality of first microstructure units 2 are less than or substantially equal to a wavelength of light requiring anti-reflection, so that the plurality of first microstructure units 2 and the substrate 1 form a sub-wavelength grating. For example, light of working wavelengths aimed by the sub-wavelength grating is visible light or light of some other selected wave range (light of a predetermined wavelength), specific working wavelengths and a size of the first microstructure are determined as needed. For example, the first microstructure can be obtained by directly performing a lithography process on the first thin film layer. In an exposure step, for example, appropriate light source is adopted, and a halftone mask or a gray tone mask can be used to obtain a photoresist pattern with a thickness changing gradually, and then a dry etching process, or the like is used in an etching step; or, printing technology can be used to form the first microstructure. For example, a nanoimprint process can be used to form the first microstructure using the first film layer 5, such as hot imprinting technology or ultraviolet hardening imprinting technology, and transfer printing technology can also be used to form the first microstructure. It should be noted that the method or process of forming the first microstructure by using the first thin film layer 5 is not limited to the ways listed above.

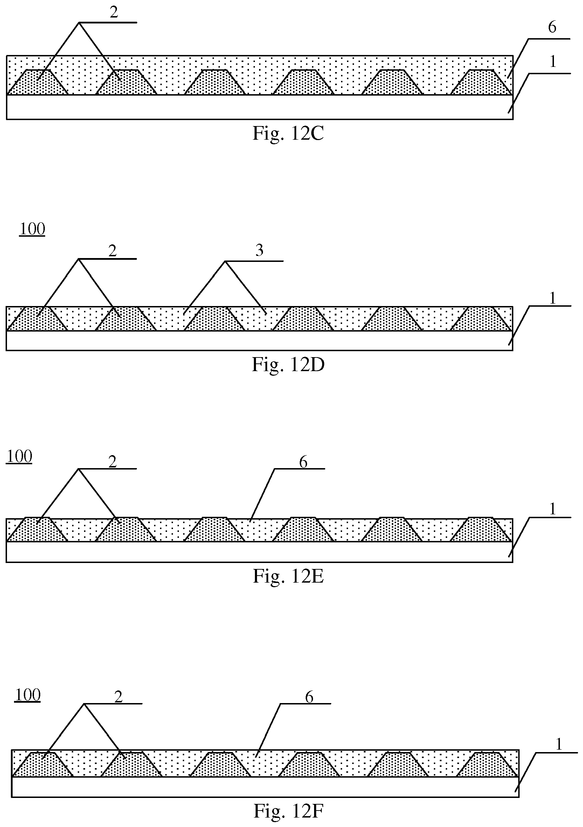

A second film layer 6 is formed on the first microstructure so that the second microstructure is formed. The second film layer 6 can be made of a material, such as magnesium fluoride, porous silica, or silica fluoride, or the like. As shown in Figure 12C, for example, a second film layer 6 is formed on the first microstructure, and the second film layer 6 covers the substrate 1 and the first microstructure. Then, a portion of the second film layer is removed by an etching process or a grinding process (for example, chemical mechanical polishing process) to make the second film layer thinner and the second microstructure 3 as shown in Figure 12D is formed. The second microstructure 3 has a thickness equal to that of the first microstructure, so that the second microstructure 3 covers the substrate 1 and side surfaces of each of the first microstructure units 2, and an anti-reflection 100 as shown in Figure 12D is formed; or, the second microstructure 3 as shown in Figure 12F is formed, and the thickness of the second microstructure 3 is appropriately larger than the thickness of the first microstructure, so that the second microstructure 3 covers the substrate 1 and the first microstructure and an anti-reflection 100 as shown in Figure 12F is formed. The anti-reflection 100 possesses a strong ability of anti-scratch. The second microstructure 3 is made of a material with a low refractive index, such as magnesium fluoride, or other materials with a low refractive index. The lower the refractive index of the second microstructure 3, the better the anti-reflection effect of the anti-reflection structure. The second microstructure 3 mentioned above can also be formed by directly depositing the second film layer with a given thickness on the first microstructure. For example, the second thin film layer with a given thickness is directly deposited on the first microstructure to form the second microstructure 3 and the thickness of the obtained second microstructure 3 is appropriately less than the thickness of the first microstructure, so that the anti-reflection structure 100 as shown in Figure 12E is formed. The anti-reflection structure 100 as shown in Figure 12E also can achieve the effect of anti-reflection and anti-scratch. The anti-reflection structure 100 obtained by the manufacturing method possesses a flat or basically flat surface, and both the first microstructure and the substrate 1 get a cover protection. In this way, the anti-reflection structure 100 achieves the effect of anti-reflection while possesses the strong ability of anti- scratch. The principle of anti-reflection can be referred to the description in the embodiments above. It should be noted that the term "appropriately less than" and "appropriately larger than" in the embodiments of the present disclosure refer to an extent of a range within which the anti-reflection structure can achieve an anti-reflection function.

For example, the first film layer 5 and the second layer 6 are deposited by a process, such as evaporation, magnetron sputtering, ion plating or chemical vapor deposition (CVD). The materials of substrate 1, the first film layer 5 and second film layer 6 are not limited to the listed ones, but the refractive index of the material of the second layer 6 is lower than the refractive index of the material of the first film layer 5. The method for forming the first film layer 5 and second film layer 6 is not limited to the methods listed. Those skilled in the art can choose according to the materials of the first film layer 5 and second film layer 6.

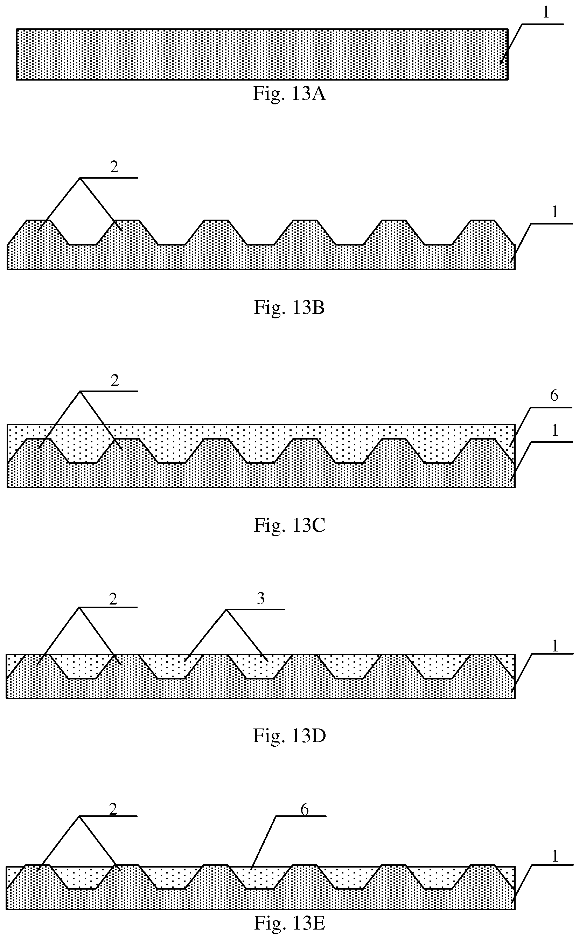

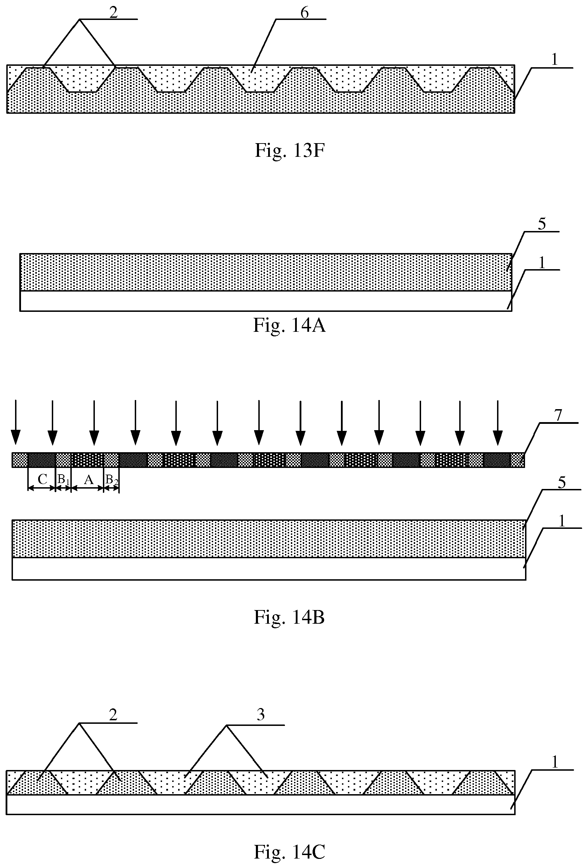

Fig. 13A-Fig.13F illustrate another manufacturing method of an anti-reflection provided by another embodiment of the present disclosure, and difference between this method and the manufacturing method shown in Fig. 12A - 12F is that the first microstructure is formed using the substrate 1 in the manufacturing method shown in Fig. 13A - 13F. The sub-wavelength grating has fewer limitations on the material of the first microstructure, and the first microstructure and the substrate 1 can be made of a same material. To simplify a manufacturing process of the anti-reflection structure, the first microstructure can be formed directly by using the substrate 1. As shown in Fig. 13A, the substrate 1 is provided. As shown in Fig. 13B, the first microstructure is directly formed on the substrate 1, the material of the substrate 1 and the method of forming the first microstructure are referred to the above description. Fig. 13C- Fig.13F are schematic views of a method of forming the second microstructure 3 provided by an embodiment of the present disclosure, and the method shown in Fig. 13C- Fig.13F is the same as that shown in Fig. 12C- Fig.12F, it can be referred to the description above. The difference between the anti-reflection structure shown in Fig.13D or Fig.13E and obtained by the method shown in Fig.13A-Fig.13F and the anti-reflection structure obtained by the method shown in Fig. 12C- Fig.12F is that the substrate 1 and the first microstructure are formed integrally in the method shown in Fig.13A- Fig.13F. The method shown in Fig.13A- Fig.13F simplifies the manufacturing process of the anti-reflection structure.

Fig. 14A- Fig.14C are schematic views of further another manufacturing method of an anti-reflection provided by an embodiment of the present disclosure, and the first microstructure and the second microstructure are formed by a photorefractive index change material in this method. Specifically, a photorefractive index change film layer is illuminated by light under a preset condition, so that a refractive index of a portion, which is used to form the first microstructure, of the photorefractive index change film layer becomes larger, or a refractive index of a portion, which is used to form the second microstructure, of the photorefractive index change film layer becomes smaller. As shown in Fig. 14A, a substrate 1 is provided and then a first film layer 5 is formed on the substrate 1. For example, the photorefractive index change material used for forming the first film layer 5 is a photosensitive material (such as a photosensitive organic material), and physical properties (including refractive index) of the photosensitive material change after an exposure to light of a predetermined wavelength. As shown in Fig. 14B, the first film layer 5 is exposed with a mask 7, so that the refractive index of a portion of the first film layer 5 illuminated by light and a portion of the first film layer 5 not illuminated by the light become different. The mask 7 can be a halftone mask or a gray tone mask with a required pattern of the first microstructure which is periodically distributed as described above. For example, a region A of the mask 7 is a full exposure portion, a region B1 and a region B2 are both partial exposure portions, and a light transmittance of the region B1 and the region B2 respectively decreases gradually along a direction from a position near the region A to a position far away the region A, and a region C is a shading portion. Those skilled in the art can obtain the mask 7 in according to conventional techniques in the art. The first film layer 5 is exposed to light for a given time at a given wavelength range. For example, the first thin film layer 5 with a thickness of about 200 nm can be exposed for 20 minutes under light with wavelength 325 nm. After the exposure, both a refractive index of a portion, which is corresponding to the full exposure portion, of the first film layer 5 and a refractive index of a portion, which is corresponding to the partial exposure portion, of the first film layer 5, decrease under some range of visible light, so that the second microstructure as shown in Fig. 14C is formed. A refractive index of a portion, which is corresponding to the shading portion, of the first film layer 5, remains unchanged. In this way, an anti-reflection structure as shown in Fig. 14C is formed. The first microstructure and the second microstructure 3 formed by the method shown in Fig. 14A-Fig.14C are formed integrally.

It should be noted that, in an embodiment of the present disclosure, for example, the first film layer 5 is formed by spinning or fine scraping using a photosensitive material, and the first film layer 5 is cured before or after the exposure. The thickness of the first film layer 5 and the second film layer 6 may be required to reach hundreds of nanometers or tens of nanometers, according to the wavelength of the light to be anti-reflected by the anti-reflection structure.

For example, in an embodiment of the present disclosure, the photorefractive index change material used for forming the first film layer 5 is GaAs, and then the first film layer 5 is irradiated by laser with a mask 7. Under a given photon energy and an excitation carrier concentration, the refractive index of the portion of the first film layer 5 being irradiated can be reduced, so that the anti-reflection structure shown in Fig. 12C is obtained. The principle of anti-reflection and the technical effect can be referred to the description in the above embodiments.

The described above are only exemplary implementations of the present disclosure, which is not intended to limit the scope of the present disclosure. The scope of the present disclosure is defined by the claims.

## Claims

1. An anti-reflection structure, comprising:
a substrate;
a first microstructure comprising a plurality of first microstructure units periodically arranged on the substrate; and
a second microstructure filled among the first microstructure to cover the substrate, to allow the anti-reflection structure to include a flat surface;
wherein the first microstructure and the second microstructure have different refractive indexes from each other, and are configured to allow a reflective index of the whole anti-reflection structure to light of a predetermined wavelength to be less than a reflective index of the substrate to the light of the predetermined wavelength.

2. The anti-reflection structure according to claim 1, wherein, along a direction from a position away from the substrate to the substrate, an equivalent refractive index of the anti-reflection structure to the light of the predetermined wavelength varies in gradient from small to large.

3. The anti-reflection structure according to claim 1 or 2, wherein material of the second microstructure has a refractive index less than that of the first microstructure.

4. The anti-reflection structure according to any one of claims 1-3, wherein the first microstructure and the substrate are a one-piece structure.

5. The anti-reflection structure according to any one of claims 1-4, wherein the first microstructure forms a one-dimensional grating or a two-dimensional grating.

6. The anti-reflection structure according to any one of claims 1-5, wherein the second microstructure has a thickness equal to or less than that of the first microstructure.

7. The anti-reflection structure according to any one of claims 1-5, wherein the second microstructure has a thickness greater than that of the first microstructure, and the second microstructure covers the first microstructure.

8. The anti-reflection structure according to any one of claims 1-7, wherein a space exposing the substrate is provided between adjacent ones of the plurality of first microstructure units.

9. The anti-reflection structure according to any one of claims 1-7, wherein no space exposing the substrate is provided between adjacent ones of the plurality of first microstructure units.

10. The anti-reflection structure according to any one of claims 1-9, wherein, along a direction from the substrate to a position away from the substrate, a size, which is in a direction parallel to the substrate, of a cross-sectional surface, which is perpendicular to the substrate, of the first microstructure, decreases gradually.

11. The anti-reflection structure according to any one of claims 1-10, wherein the substrate, the first microstructure and the second microstructure are made of transparent materials.

12. A display device, comprising the anti-reflection structure according to any one of claims 1-11, wherein the anti-reflection structure is at a display side of the display device.

13. A fabrication method for an anti-reflection structure, comprising:
providing a substrate;
forming a first microstructure on the substrate; and
forming a second microstructure on the substrate;
wherein the first microstructure is periodically arranged on the substrate, and the second microstructure is filled in the first microstructure to cover the substrate, to allow the anti-reflection structure to include a flat surface; and
the first microstructure and the second microstructure have different refractive indexes, and are configured to allow a reflective index of the whole anti-reflection structure to light of a predetermined wavelength to be less than a reflective index of the substrate to the light of the predetermined wavelength.

14. The fabrication method for the anti-reflection structure according to claim 13, wherein forming of the first microstructure on the substrate and forming of the second microstructure on the substrate comprise:
forming a first film layer on the substrate;
forming the first microstructure using the first film layer; and
forming a second film layer on the first microstructure to form the second microstructure.

15. The fabrication method for the anti-reflection structure according to claim 13, wherein forming of the first microstructure on the substrate and forming of the second microstructure on the substrate comprise:
forming the first microstructure to be integrally with the substrate by using the substrate; and
forming a second film layer on the first microstructure to form the second microstructure.

16. The fabrication method for the anti-reflection structure according to any one of claims 13-15, wherein forming of the first microstructure on the substrate and forming of the second microstructure on the substrate comprise:
forming a photorefractive index change film layer on the substrate; and
illuminating the photorefractive index change film layer by light under a preset condition, so that a refractive index of a portion, which is used to form the first microstructure, of the photo refractive index change layer becomes larger, or a refractive index of a portion, which is used to form the second microstructure, of the photorefractive index change film layer becomes smaller.
